# EUROPEAN PATENT APPLICATION

(11) **EP 2 811 735 A1**
(43) Date of publication of application: **10.12.2014**
(21) Application number: 12856582.7
(22) Date of filing: 15.10.2012
(51) Int. Cl.: H04N 5/225, G03B 15/00, H04N 5/232

(54) **IMAGE SENSOR SYSTEM, INFORMATION PROCESSING DEVICE, INFORMATION PROCESSING METHOD AND PROGRAM**

(30) Priority: 30.01.2012 JP 2012017111
(71) Applicant: Kabushiki Kaisha Toshiba, Minato-ku Tokyo 105-8001 (JP)
(72) Inventor: NAGATA, Kazumi, Tokyo 1058001 (JP); ENOHARA, Takaaki, Tokyo 1058001 (JP); BABA, Kenji, Tokyo 1058001 (JP); NODA, Shuhei, Tokyo 1058001 (JP); NISHIMURA, Nobutaka, Tokyo 1058001 (JP)
(74) Representative: Granleese, Rhian Jane
(86) International application number: PCT/JP2012/076639
(87) International publication number: WO 2013/114684

(57) **Abstract**

Provided are an image capturing unit (10) that captures an image of a predetermined space; an image acquiring unit (11) that acquires the image captured by the image capturing unit (10); a mask region deriving unit (24) that derives, by using the image acquired by the image acquiring unit (11), a mask region not to be sensed from the image; a detection region deriving unit (26) that derives, by using the image acquired by the image acquiring unit (11), a detection region of each type as a sensing target from the image; a retaining unit (12, 13) that retains the mask region and the detection region as setting information; and a sensing unit (14) that senses a state of the space from the image acquired by the acquiring unit based on the setting information retained in the retaining unit (12, 13).

## Description

### TECHNICAL FIELD

Embodiments of the present invention relate to an image sensor system, an information processing apparatus, an information processing method, and a program.

### BACKGROUND ART

Conventionally, a technology for sensing the presence/absence or action of a person by using an image sensor is applied for security purposes and the like. In the related technology, since a large amount of information is obtained from an image sensor, a region not to be sensed (mask region) and the like are generally adjusted according to application environments. For security purposes and the like, the number of image sensors installed is relatively small with respect to the scale of a building (for example, one image sensor in each floor), and the adjustment of image sensors are usually performed manually one by one with an eye on captured images.

Also, the above technology begins to be applied not only for security purposes but also for automatic control such as lighting, air conditioning, and the like. In this case, since the number of image sensors installed increases according to the scale of a building, a lot of time is taken to adjust the image sensors manually one by one. Therefore, there is conventionally proposed a technology for providing a dedicated mode for mask region installation and setting a region of an image, which has varied in the dedicated mode, as a mask region.

### CITATION LIST

### PATENT LITERATURE

Patent Literature 1: Japanese Patent Application Laid-open No. 2011-28956

### SUMMARY OF THE INVENTION

### PROBLEM TO BE SOLVED BY THE INVENTION

However, although the conventional technology related to mask region setting can set a mask region automatically, it does not consider a sensing target region. Therefore, since a sensing target region cannot be efficiently set, a sensing target region is difficult to set with respect to each type of region such as a passage or a desk.

### MEANS FOR SOLVING PROBLEM

An image sensor system of an embodiment comprises an image capturing unit; an image acquiring unit; a mask region deriving unit; a detection region deriving unit; a retaining unit; and a sensing unit. The image capturing unit captures an image of a predetermined space. The image acquiring unit acquires the image captured by the image capturing unit. The mask region deriving unit derives, by using the image acquired by the image acquiring unit, a mask region not to be sensed from the image. The detection region deriving unit derives, by using the image acquired by the image acquiring unit, a detection region of each type as a sensing target from the image. The retaining unit retains the mask region and the detection region as setting information. The sensing unit senses a state of the space from the image acquired by the acquiring unit based on the setting information retained in the retaining unit.

### BRIEF DESCRIPTION OF DRAWINGS

[FIG. 1] FIG. 1 is a diagram illustrating an example of a configuration of an image sensor system according to a first embodiment.
[FIG. 2] FIG. 2 is a diagram illustrating an example of installation of an image sensor according to the first embodiment.
[FIG. 3] FIG. 3 is a block diagram illustrating an example of the configuration of the image sensor and a maintenance terminal according to the first embodiment.
[FIG. 4] FIG. 4 is a diagram illustrating an example of an image captured by the image sensor.
[FIG. 5] FIG. 5 is a diagram illustrating an example of a mask region and a detection region.
[FIG. 6] FIG. 6 is a diagram for describing an operation of a lens center detecting unit.
[FIG. 7] FIG. 7 is a diagram illustrating an example of a distortion-corrected image.
[FIG. 8] FIG. 8 is a diagram illustrating an example of a normal image mask region.
[FIG. 9] FIG. 9 is a flowchart illustrating an example of region setting processing performed by the maintenance terminal according to the first embodiment.
[FIG. 10] FIG. 10 is a flowchart illustrating an example of region generating processing performed by the maintenance terminal according to the first embodiment.
[FIG. 11] FIG. 11 is a diagram illustrating an example of the display of a distortion-corrected image.
[FIG. 12] FIG. 12 is a block diagram illustrating an example of the configuration of an image sensor according to a first modification of the first embodiment.
[FIG. 13] FIG. 13 is a diagram illustrating an example of an authority setting retaining unit according to a modification of the first embodiment.
[FIG. 14] FIG. 14 is a block diagram illustrating an example of a configuration of a maintenance terminal according to a second modification of the first embodiment.
[FIG. 15] FIG. 15 is a block diagram illustrating an example of a configuration of a maintenance terminal according to a second embodiment.
[FIG. 16] FIG. 16 is a diagram illustrating an example of a marker according to the second embodiment.
[FIG. 17] FIG. 17 is a diagram illustrating an example of an image acquired by an image sensor according to the second embodiment.
[FIG. 18] FIG. 18 is a diagram for describing an operation of a mask region setting unit according to the second embodiment.
[FIG. 19] FIG. 19 is a diagram for describing an operation of the mask region setting unit according to the second embodiment.
[FIG. 20] FIG. 20 is a flowchart illustrating an example of region setting processing performed by the maintenance terminal according to the second embodiment.
[FIG. 21] FIG. 21 is a block diagram illustrating an example of a configuration of an image sensor according to a third embodiment.
[FIG. 22] FIG. 22 is a diagram for describing an operation of the image sensor according to the third embodiment.
[FIG. 23] FIG. 23 is a diagram for describing an operation of the image sensor according to the third embodiment.
[FIG. 24] FIG. 24 is a diagram for describing an operation of the image sensor according to the third embodiment.
[FIG. 25] FIG. 25 is a flowchart illustrating an example of region correcting processing performed by the maintenance terminal according to the third embodiment.
[FIG. 26] FIG. 26 is a diagram illustrating an example of an external configuration of the image sensor according to the third embodiment.
[FIG. 27] FIG. 27 is a diagram illustrating another example of the external configuration of the image sensor according to the third embodiment.

### MODE(S) FOR CARRYING OUT THE INVENTION

Hereinafter, embodiments of an image sensor system and an imaging managing method according to the present invention will be described in detail with reference to the accompanying drawings. In the following embodiments, a description will be given of an example in which the image sensor system and the imaging managing method according to the present invention are applied to a building such as an office building.

### [First Embodiment]

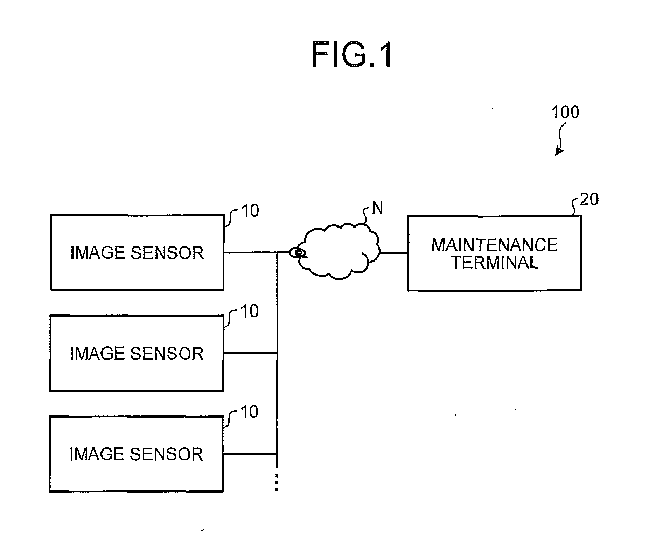

FIG. 1 is a diagram illustrating an example of a configuration of an image sensor system 100 according to the first embodiment. As illustrated in FIG. 1, the image sensor system 100 includes image sensors 10 and a maintenance terminal 20. The maintenance terminal 20 is detachably connected to the respective image sensors 10 or a network N, to which the respective image sensors 10 are connected, to perform transmission and reception of a variety of information to and from the respective image sensors 10. Also, the number of image sensors 10 is not particularly limited.

The image sensor 10 includes a fisheye camera (not illustrated) including an image sensor such as a CCD (Charge Coupled Device) or a fisheye lens (circular fisheye lens), and captures a wide-angle image by using the fisheye camera. Also, the image sensor 10 includes a computer configuration such as a CPU (Central Processing Unit), a ROM (Read Only Memory) and a RAM (Random Access Memory), a nonvolatile storage unit storing a variety of information, and a communication unit performing communication with an external device such as the maintenance terminal 20. The image sensor 10 detects a peripheral state of the image sensor 10 by sensing an image captured by a functional unit, which will be described below, and stores or outputs the detection result to the external device. Herein, examples of the detection result may include information indicating the presence/absence of a person.

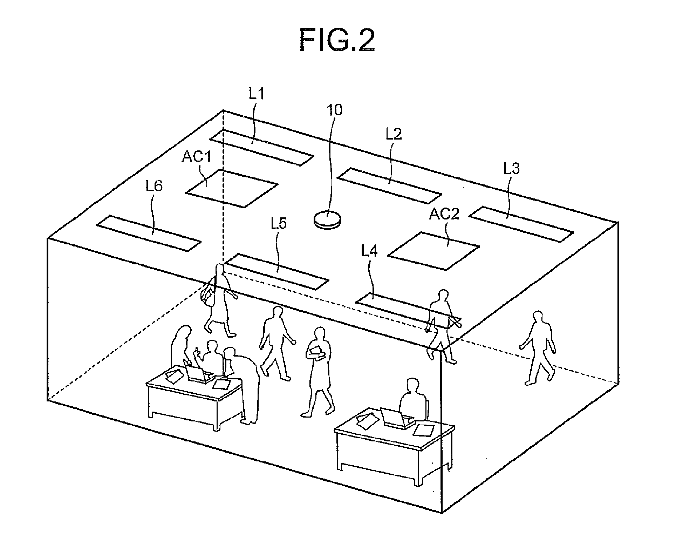

FIG. 2 is a diagram illustrating an example of the installation of the image sensor 10 according to the first embodiment. As illustrated in FIG. 2, the image sensor 10 is installed at a ceiling portion of a building to capture an image of inside the building. Also, lighting L1 to L6 and air conditioning AC1 and AC2 are installed at the ceiling portion in the building illustrated in FIG. 2, and a demand control device (not illustrated) executes power control (for example, on/off) of these electrical devices based on the detection result of the image sensor 10. Also, positions and the number of the image sensors 10 installed in the building are not limited to that in the example of FIG. 2.

Returning to FIG. 1, the maintenance terminal 20 is an information processing device such as a PC (Personal Computer) or a portable communication terminal, and mainly performs maintenance of the image sensor 10. The maintenance terminal 20 includes a computer configuration such as a CPU, a ROM and a RAM, a nonvolatile storage unit storing a variety of information, a communication unit performing communication with an external device such as the image sensor 10, an input unit such as a keyboard or a pointing device, and an output unit such as a display unit (not illustrated). The maintenance terminal 20 sets a mask region and a detection region, which will be described below, in each image sensor 10 based on an image captured by each image sensor 10 or the capturing condition of the image.

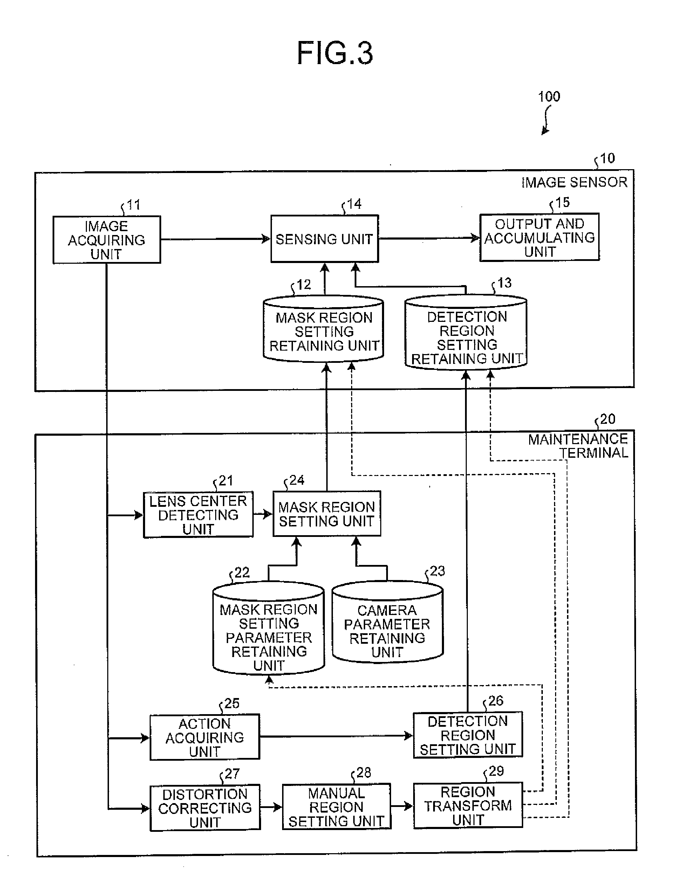

FIG. 3 is a block diagram illustrating an example of a configuration of the image sensor 10 and the maintenance terminal 20. The image sensor 10 includes, as functional units, an image acquiring unit 11, a mask region setting retaining unit 12, a detection region setting retaining unit 13, a sensing unit 14, and an output and accumulating unit 15. Among the functional units included in the image sensor 10, the image acquiring unit 11, the sensing unit 14, and the output and accumulating unit 15 are implemented by the computer configuration of the image sensor 10, and the mask region setting retaining unit 12 and the detection region setting retaining unit 13 are implemented by storage medium of the image sensor 10.

The image acquiring unit 11 sequentially acquires frame-by-frame images captured by the fisheye camera. Also, the image acquiring unit 11 outputs the acquired image to the sensing unit 14 and provides (outputs) the same to the maintenance terminal 20 through a communication unit (not illustrated). Also, the image output to the maintenance terminal 20 is allocated an identifier such as an IP address for identification of an own device.

Among the regions of the image acquired by the image acquiring unit 11, the mask region setting retaining unit 12 retains a mask region that is data determining a region excluded from a sensing target. Also, among the regions of the image acquired by the image acquiring unit 11, the detection region setting retaining unit 13 retains a detection region that is data determining a sensing target region.

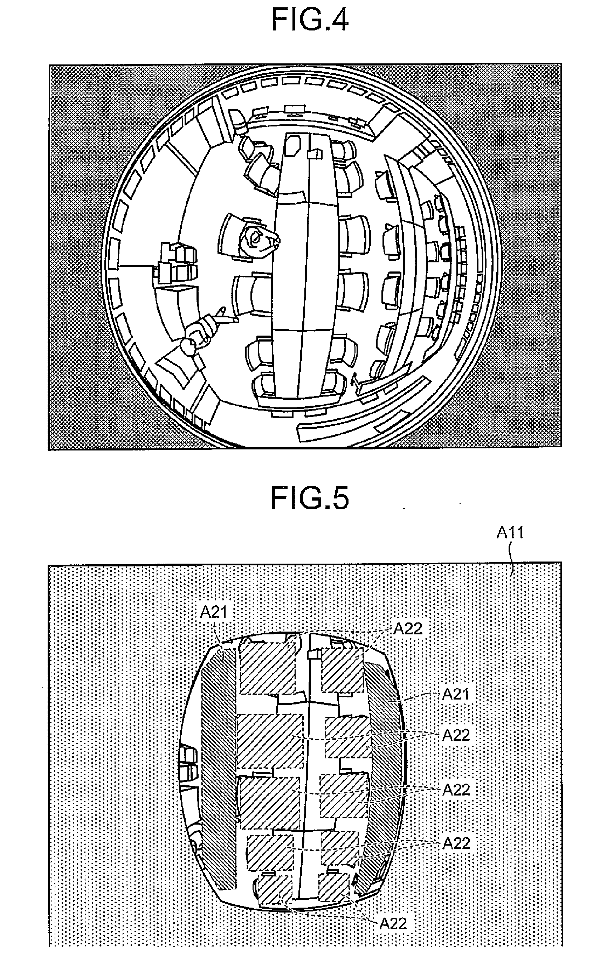

Hereinafter, the mask region and the detection region will be described with reference to FIGS. 4 and 5. FIG. 4 is a diagram illustrating an example of an image captured by the image sensor 10. As illustrated in FIG. 4, the image sensor 10 captures a spherical image by an optical behavior of the fisheye camera. Therefore, the image captured by the image sensor 10 includes, for example, a wall portion of a building or the like that is a region to be excluded from the sensing target. Therefore, as illustrated in FIG. 5, a region to be excluded from the sensing target is set as a mask region A11 among the image captured by the image sensor 10, so that the region can be excluded from the sensing target.

Also, as the detection region, a sensing target region among the image captured by the image sensor 10 is set for each type of the region. Herein, a type-by-type division indicator may use, for example, a numerical value based on the state of a person staying in the room, such as the number of people detected per unit time, or the action amount that will be described below. FIG. 5 illustrates an example in which regions corresponding to a passage and a desk (work table) are classified in an image based on the action amount of a person, and the region corresponding to the passage is set as a detection region A21 as well as the region corresponding to the desk is set as a detection region A22. In each detection region divided by types, it is configured such that sensing processing is performed according to the type such as the difference in the parameter related to sensing (for example, a threshold value related to the verification of the presence/absence of a person). Also, as for a region not belonging to any of the mask region A11 and the detection regions A21 and A22, like the mask region A11, the region may be excluded from the sensing target and sensing may be performed using specific parameters as other regions.

Returning to FIG. 3, the sensing unit 14 detects a state inside a space in which an own device is installed, by sensing a plurality of temporally consecutive images acquired by the image acquiring unit 11, according to the setting contents of the mask region and the detection region retained in the mask region setting retaining unit 12 and the detection region setting retaining unit 13. Specifically, when the mask region is excluded from the entire region of an image acquired by the image acquiring unit 11, the sensing unit 14 calculates a variation between images in a region set as a detection region among the remaining regions, and acquires the detection results such as the presence/absence of a person based on the parameter according to the type of the region. Herein, the parameter is determined, for example, as a threshold value related to the presence/absence determination with respect to each type of the detection region. Also, a method for detecting the presence/absence of a person is implemented using the publicly-known technology.

The output and accumulating unit 15 outputs the detection result acquired by the sensing unit 14 to an external device such as a demand control device that performs power control of an electrical device inside the building. Also, the output and accumulating unit 15 stores the detection result acquired by the sensing unit 14 in a storage medium (not illustrated) that is included in an own device or an external device.

On the other hand, as illustrated in FIG. 3, the maintenance terminal 20 includes a lens center detecting unit 21, a mask region setting parameter retaining unit 22, a camera parameter retaining unit 23, a mask region setting unit 24, an action acquiring unit 25, a detection region setting unit 26, a distortion correcting unit 27, a manual region setting unit 28, and a region transform unit 29. Herein, among the functional units included in the maintenance terminal 20, the lens center detecting unit 21, the mask region setting unit 24, the action acquiring unit 25, the detection region setting unit 26, the distortion correcting unit 27, the region transform unit 29 are implemented by the computer configuration of the maintenance terminal 20, and the mask region setting parameter retaining unit 22 and the camera parameter retaining unit 23 are implemented by storage medium of the maintenance terminal 20. Also, the manual region setting unit 28 is implemented by cooperation of a gravitation unit, a display unit, and the computer configuration of the maintenance terminal 20.

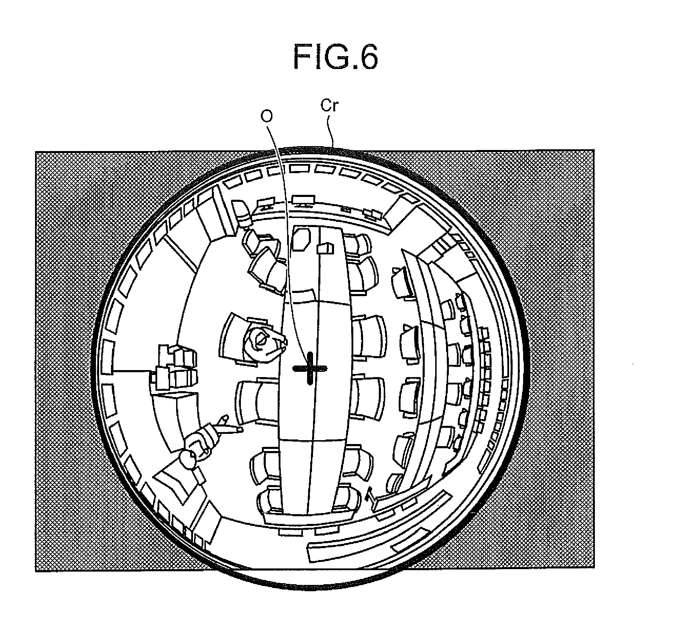

The lens center detecting unit 21 analyzes an image acquired by the image acquiring unit 11 of each image sensor 10, and detects an optical center (lens center) of the image sensor 10 from the image. Specifically, by performing a Hough transform that is a publicly-known image processing method, as illustrated in FIG. 6, the lens center detecting unit 21 detects a circle Cr, which is an outline of the image captured by the fisheye camera, and sets the central coordinates O of the circle Cr as the lens center. Herein, FIG. 6 is a diagram for describing an operation of the lens center detecting unit 21.

The mask region setting parameter retaining unit 22 retains parameters related to the setting of the mask region (mask region setting parameters). Herein, the mask region setting parameters include, for example, setting values representing a size and a shape such as a circle with a radius of 2m or a rectangle with each side length of 3m. Also, indication information indicating the combination of the setting values may be included as the parameter.

The camera parameter retaining unit 23 retains an identifier (for example, an IP address) of each image sensor 10 and parameters (camera parameters) representing the image capturing condition of the image sensor 10, in association with each other. The camera parameters may include, for example, an installation height of the image sensor 10 or a distortion factor (distortion aberration) of the fisheye camera.

Based on the lens center detected by the lens center detecting unit 21, the mask region setting unit 24 sets a mask region of each image sensor 10 by using the mask region setting parameters and the camera parameters.

Specifically, based on the lens center detected by the lens center detecting unit 21, the mask region setting unit 24 arranges a region determined by the mask region setting parameters retained in the mask region setting parameter retaining unit 22. Also, according to the camera parameters of each image sensor 10, the mask region setting unit 24 adjusts the size or shape of the arranged region and derives the result as a mask region. The mask region setting unit 24 transmits the derived mask region to the corresponding image sensor 10, retains the same in the mask region setting retaining unit 12 of the corresponding image sensor 10, and sets a mask region of each image sensor 10.

The action acquiring unit 25 stores an image for a predetermined period (for example, 10 minutes, 24 hours, or 10 days), which is acquired by each image sensor 10, analyzes the image, and acquires a feature amount corresponding to a numerical value of an action of the person staying in the room from the corresponding image. Herein, the feature amount is, for example, an action amount, and is acquired using the publicly-known technique.

For example, when the action amount is acquired, with respect to the image for a predetermined period acquired by each image sensor 10, a difference (differential image) between the images is extracted and the extracted differential image is superimposed, thereby generating an accumulative differential image. Also, the action acquiring unit 25 obtains a numerical value of the feature of a brightness change in a peripheral region of a block or a pixel of a region having a concentration gradient of the generated accumulative differential image, specifies a positional relationship of the pixel or block of the region on the corresponding image, and generates a feature amount inside the accumulative differential image. Also, the action acquiring unit 25 identifies the action content of the person staying in the room from the generated feature amount by using an identification model prestored in a storage unit (not illustrated). The action acquiring unit 25 integrates the identification results of the action contents obtained from the accumulative differential image and calculates an action amount in each region (each position) inside the image. Also, the action acquiring unit 25 calculates the occurrence frequency of each action, which is obtained from a relation equation of the generation time and the total measurement time, in each region (each position) inside the image.

Based on the action amount for each region acquired by the action acquiring unit 25 from the image of each image sensor 10, the detection region setting unit 26 classifies the region by a predetermined type such as a passage or a desk, and derives the region of each type as a detection region. For example, the detection region setting unit 26 classifies an image with an occurrence frequency of 30% or more based on the content of the action amount, and classifies the region by each type such as a passage or a desk. The detection region setting unit 26 transmits the detection region classified by each type to the corresponding image sensor 10, retains the same in the detection region setting retaining unit 13 of the corresponding image sensor 10, and sets a detection region in each image sensor 10.

Accordingly, in an office or the like in which each image sensor 10 is installed, since a detection region according to an actual use condition can be automatically set in each image sensor 10, the more appropriate detection result can be acquired by each image sensor 10.

Also, the unit of setting the above-described mask region and detection region may be unit of pixel or unit of block with a predetermined size. Also, the mask region and the detection region may be a coordinate value although not being image data. For example, when the coordinate value is used, the images can be displayed by designating the respective vertex coordinates of a rectangle or a polygon.

The distortion correcting unit 27 performs a distortion correction on the image acquired by each image sensor 10, generates a distortion-corrected normal image, and displays the distortion-corrected image on a display unit (not illustrated).

According to the input of a user operating the maintenance terminal 20, the manual region setting unit 28 sets a region corresponding to a mask region (hereinafter, referred to as a normal image mask region) or a region corresponding to a detection region (hereinafter, referred to as a normal image detection region) on the distortion-corrected image. Also, the region transform unit 29 performs an inverse transformation of the distortion correction, performed by the distortion correcting unit 27, on the normal image mask region set by the manual region setting unit 28, and generates a mask region corresponding to the image acquired by the image sensor 10.

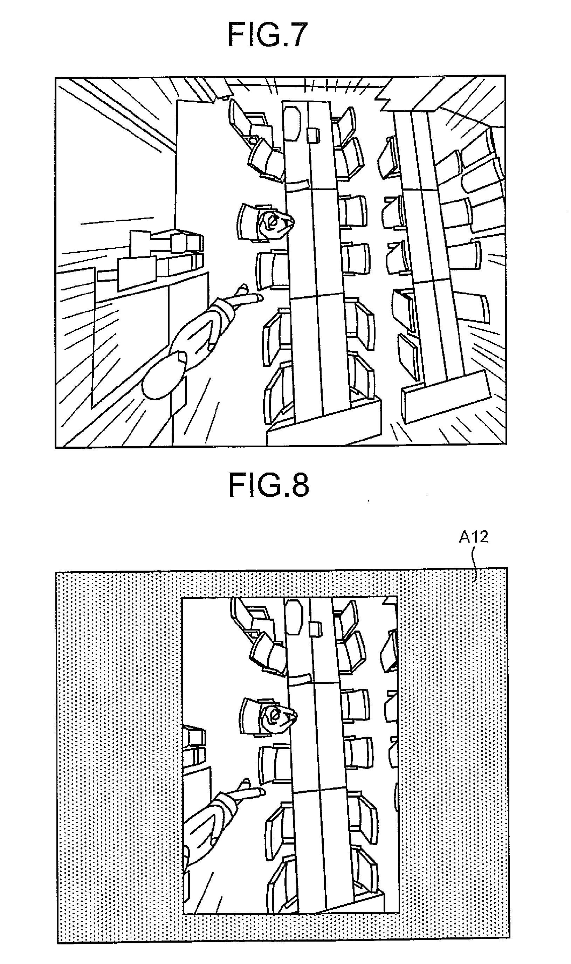

Hereinafter, the operations of the distortion correcting unit 27, the manual region setting unit 28 and the region transform unit 29 will be described with reference to FIGS. 4, 5, 7 and 8. First, when an image acquired by the image sensor 10 is in the state illustrated in FIG. 4, the distortion correcting unit 27 performs a distortion correction on the image and generates a distortion-corrected normal image (see FIG. 7). Herein, FIG. 7 is a diagram illustrating an example of the distortion-corrected image. Also, the distortion-corrected image is displayed on a display unit (not illustrated).

The manual region setting unit 28 receives an operation input of a user operating the maintenance terminal 20 through an input device (not illustrated), and sets a normal image mask region on the distortion-corrected image according to the operation content (see FIG. 8). Herein, FIG. 8 is a diagram illustrating an example of the normal image mask region, for example, a rectangular normal image mask region A12.

The region transform unit 29 performs an inverse transformation of the distortion correction on the normal image mask region A12 set by the manual region setting unit 28, and generates a mask region A11 corresponding to the image of FIG. 4 (see FIG. 5).

Also, by using a model of the mask region setting parameters, the mask region generated by the region transform unit 29 may be retained in the mask region setting parameter retaining unit 22 in association with the identifier of the corresponding image sensor 10, or may be retained in the mask region setting retaining unit 12 of the image sensor 10 that is an acquisition source of the image. Also, although the first embodiment describes the generation of the mask region, the detection region can be generated in the same manner.

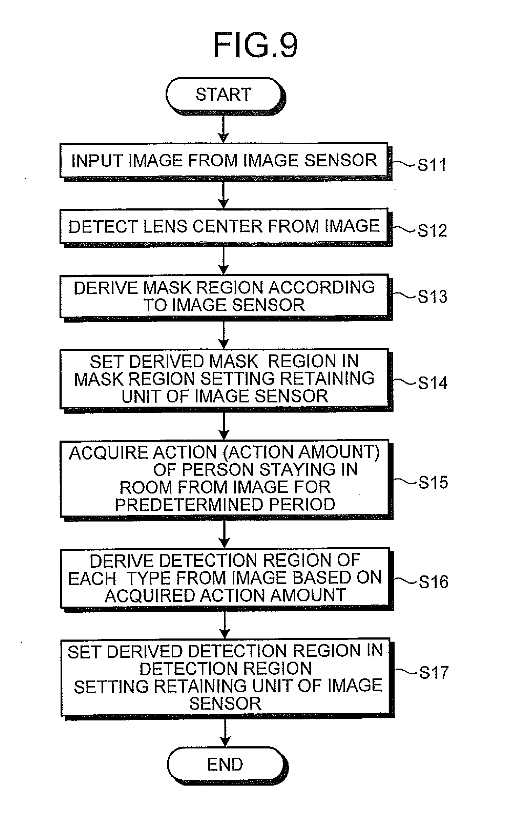

Next, the operation of the maintenance terminal 20 according to the first embodiment will be described. First, a region setting processing operation performed by the maintenance terminal 20 will be described with reference to FIG. 9. Herein, FIG. 9 is a flowchart illustrating an example of the region setting processing. Also, the present processing is performed in setting (changing) a mask region and a detection region, such as the installation or maintenance of the image sensor 10.

First, when an image is acquired in each image sensor 10 and the image is output to the maintenance terminal 20 (step S11), the lens center detecting unit 21 analyzes each input image and detects a lens center from the image (step S12).

Based on the lens center detected in step S12, the mask region setting unit 24 derives a mask region corresponding to each image sensor 10 by using the mask region setting parameters retained in the mask region setting parameter retaining unit 22 and the camera parameters retained in the camera parameter retaining unit 23 (step S13). Subsequently, the mask region setting unit 24 retains the derived mask region in the mask region setting retaining unit 12 of the corresponding image sensor 10, and sets a mask region of each image sensor 10 (step S14).

Also, the action acquiring unit 25 analyzes an image for a predetermined period, which is acquired by each image sensor 10, and acquires an action (action amount) of the person staying in the room in each region from the corresponding image (step S15). Subsequently, based on the action amount in each region acquired in step S15, the detection region setting unit 26 specifies a detection region such as a passage region or a work region with respect to each type (step S16). The detection region setting unit 26 retains the detection region of each specified type in the detection region setting retaining unit 13 of the corresponding image sensor 10, sets a detection region in each image sensor 10 (step S17), and ends the present processing.

In this manner, according to the region setting processing, by using an image captured by each image sensor 10 or the capturing condition of the image, the mask region and the detection region can be derived and set in each image sensor 10. Accordingly, since the mask region and the detection region suitable for each image sensor 10 can be automatically set in each image sensor 10, the setting of the mask region and the detection region can be performed efficiently.

Also, in the above region setting processing, the setting of the mask region and the detection region is performed continuously. However, the present invention is not limited thereto, and the setting of the mask region and the detection region may be performed separately as independent processing.

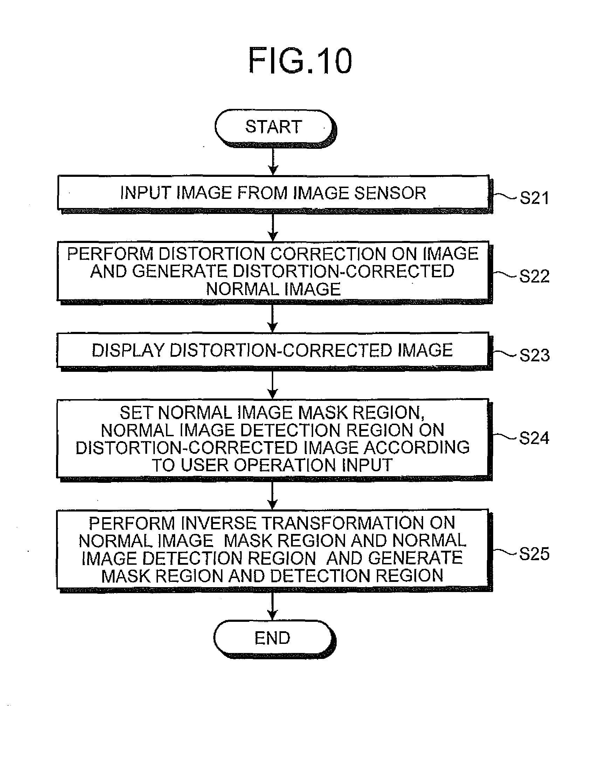

Next, a region generating processing operation performed by the maintenance terminal 20 will be described with reference to FIG. 10. Herein, FIG. 10 is a flowchart illustrating an example of the region generating processing.

First, when an image is acquired in any one of the image sensors 10 and the image is output to the maintenance terminal 20 (step S21), the distortion correcting unit 27 performs a distortion correction on the input image, generates a distortion-corrected normal image (step S22), and displays the distortion-corrected image on a display unit (not illustrated) (step S23).

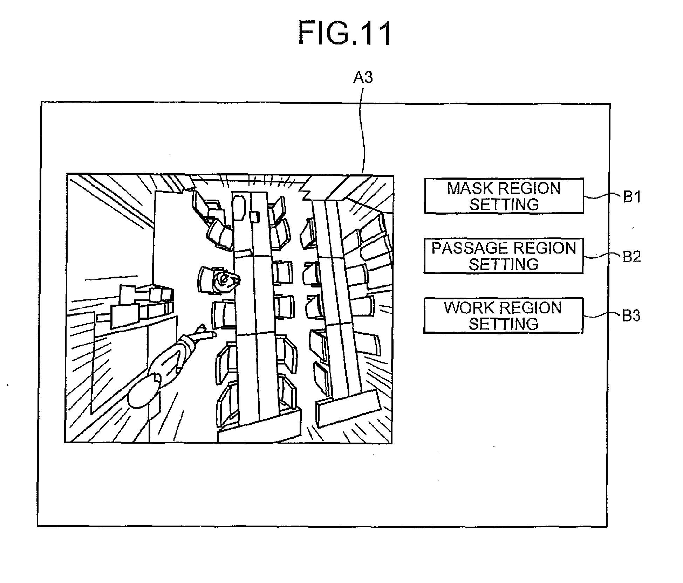

FIG. 11 is a diagram illustrating an example of the display of a distortion-corrected image displayed on the display unit. Also, FIG. 11 illustrates a case where the distortion-corrected image is displayed in a display region A3. Also, buttons B1 to B3 disposed on the right side of the display region A3 are to indicate the input of a mask region or a detection region (a passage region or a work region). By pressing any one of the buttons B1 to B3 and then describing a figure (a rectangle or a polygon) corresponding to the region on the distortion-corrected image, a normal image mask region or a normal image detection region can be input. Also, the display type of the distortion-corrected image is not limited to the example of FIG. 11. For example, the distortion-corrected image may be displayed such that the distortion-corrected image can be compared with an original image of the distortion-corrected image. Also, in the case of this type, the inversely-transformed normal image mask region or normal image detection region may be displayed on the original image in a superimposed manner.

Returning to FIG. 10, the manual region setting unit 28 sets a normal image mask region or a normal image detection region on the distortion-corrected image according to the operation content of the user (step S24). Subsequently, the region transform unit 29 performs an inverse transformation of the distortion correction, performed by the distortion correcting unit 27 in step S22, on the normal image mask region or the normal image detection region set on the distortion-corrected image, generates a mask region or a detection region corresponding to the image sensor 10 (step S25), and ends the present processing.

In this manner, according to the above region generating processing, a mask region and a detection region are derived by normalizing an image distorted by an operation of an fisheye camera as a distortion-corrected image and inversely-transforming a normal image mask region and a normal image detection region set on the distortion-corrected image. Accordingly, when the mask region and the detection region are manually generated (adjusted), the distortion by the fisheye camera need not be considered. Therefore, the number of processes necessary to generate the mask region and the detection region can be reduced, and the user's convenience can be improved.

Also, as a model, the mask region and the detection region generated in the above processing may be retained in the mask region setting parameter retaining unit 22 or the camera parameter retaining unit 23, or may be retained in the mask region setting retaining unit 12 or the detection region setting retaining unit 13 of the image sensor 10 that is an acquisition source of the image.

In the above manner, according to the first embodiment, since the mask region and the detection region suitable for each image sensor 10 can be automatically set for each image sensor 10, the setting of the mask region and the detection region can be performed efficiently.

Also, in the configuration of FIG. 3, the image acquired by the image sensor 10 is unconditionally provided to the maintenance terminal 20. However, for security improvement, the providing of the image may be restricted according to the type of a user operating the maintenance terminal 20. Hereinafter, this embodiment will be described as a first modification of the first embodiment.

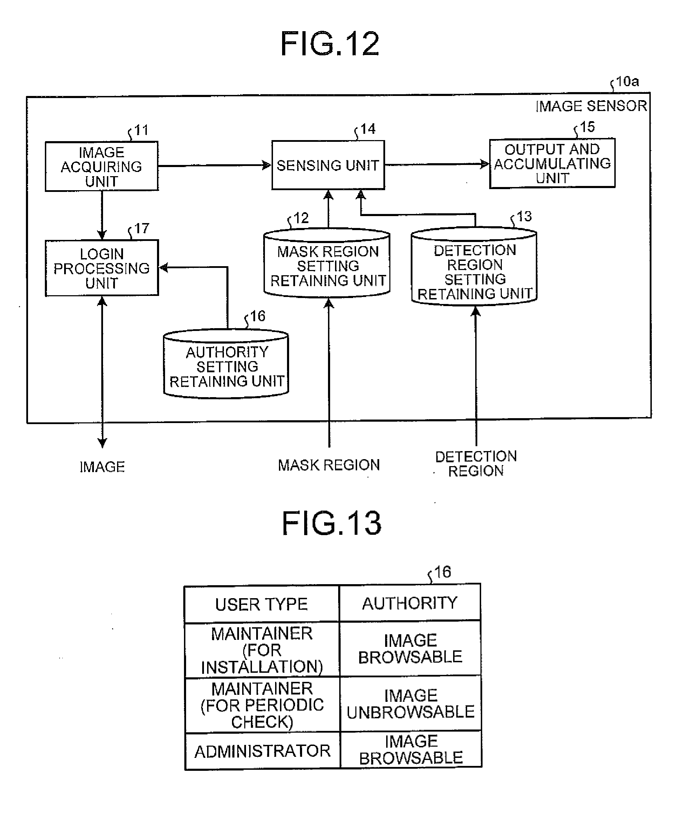

FIG. 12 is a block diagram illustrating an example of a configuration of an image sensor 10a according to a first modification. As illustrated in FIG. 12, the image sensor 10a includes an authority setting retaining unit 16 and a login processing unit 17 in addition to the configuration of FIG. 3.

The authority setting retaining unit 16 is implemented by a storage medium included in the image sensor 10a. The authority setting retaining unit 16 prescribes an authority related to an image browse with respect to each type of a user operating the maintenance terminal 20, that is, a user accessing the image sensor 10a.

FIG. 13 is a diagram illustrating an example of the authority setting retaining unit 16. As illustrated in FIG. 13, the authority setting retaining unit 16 retains the authority related to an image browse with respect to each user type in an associated manner. Herein, FIG. 13 illustrates an example in which a maintainer related to the installation of the image sensor 10a (for installation), a maintainer performing a periodic check on the image sensor 10a (for a periodic check), and an administrator of the image sensor system 100 are defined as user types. Also, as the authority of the users, the maintainer (for installation) and the administrator are allowed to browse an image, and the maintainer (for a periodic check) is not allowed to browse an image.

Returning to FIG. 12, the login processing unit 17 is implemented by a computer configuration of the image sensor 10a. The login processing unit 17 reads the authority corresponding to the type of a user accessing an own device from the authority setting retaining unit 16, and controls whether to output the image acquired by the image acquiring unit 11 to the maintenance terminal 20 according to the read contents. Also, the maintenance terminal 20 notifies the user type of a user operating the maintenance terminal 20 when the image sensor 10a is accessed.

In this manner, in the image sensor 10a according to the first modification, since the image output is restricted according to the type of a user accessing an own device, the information output can be prevented from being performed without preparation. Therefore, a secret or a privacy can be protected. Also, the setting content of the authority setting retaining unit 16 is not limited to the above example. For example, the authority may be set with respect to each type of the maintenance terminal 20 such that an image can be browsed when a PC is used as the maintenance terminal 20, and an image cannot be browsed when a portable phone is used as the maintenance terminal 20.

Also, in the configuration of FIG. 3, the maintenance terminal 20 detects a lens center from an image captured by the image sensor 10, and sets the mask region by using a variety of information retained in the mask region setting parameter retaining unit 22 and the camera parameter retaining unit 23. However, as similar to that of the detection region, the mask region may be set based on the action amount acquired by the action acquiring unit 25. Hereinafter, this embodiment will be described as a second modification of the first embodiment.

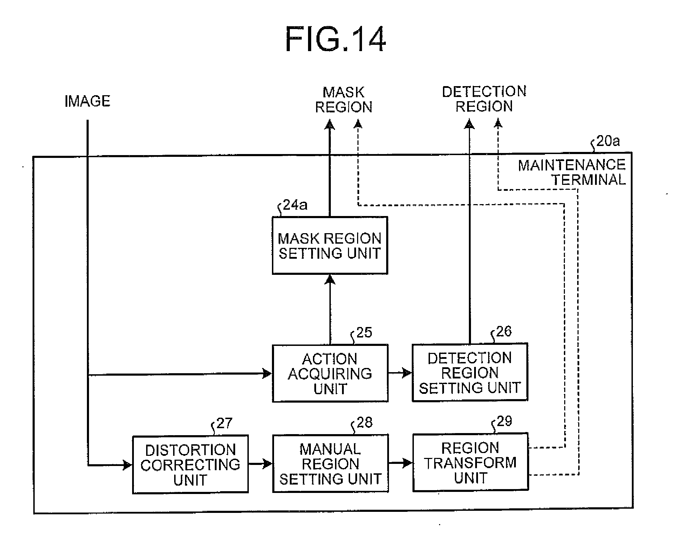

FIG. 14 is a block diagram illustrating an example of a configuration of a maintenance terminal 20a according to the second modification. As illustrated in FIG. 14, the maintenance terminal 20a includes a mask region setting unit 24a instead of the configuration of the lens center detecting unit 21 of FIG. 3, the mask region setting parameter retaining unit 22, the camera parameter retaining unit 23 and the mask region setting unit 24.

Herein, the mask region setting unit 24a derives a mask region from an image of each image sensor 10 based on the occurrence frequency or the action amount in each region acquired by the action acquiring unit 25.

For example, the mask region setting unit 24a may derive a region with an occurrence frequency of less than 10% as a mask region, or may derive a region with an action amount representing a predetermined action content as a mask region. The mask region setting unit 24a transmits the derived mask region to the corresponding image sensor 10, retains the same in the mask region setting retaining unit 12 of the corresponding image sensor 10, and sets a mask region in each image sensor 10.

As above, according to the maintenance terminal 20a of the second modification, in an office or the like in which each image sensor 10 is installed, since a mask region according to an actual use condition can be automatically set in each image sensor 10, the more appropriate detection result can be acquired by each image sensor 10.

### [Second Embodiment]

Next, another setting method for a mask range and a detection range will be described as a second embodiment. In addition, the same components as in the above-described first embodiment will be denoted by the same reference numerals, and a detailed description thereof will be omitted.

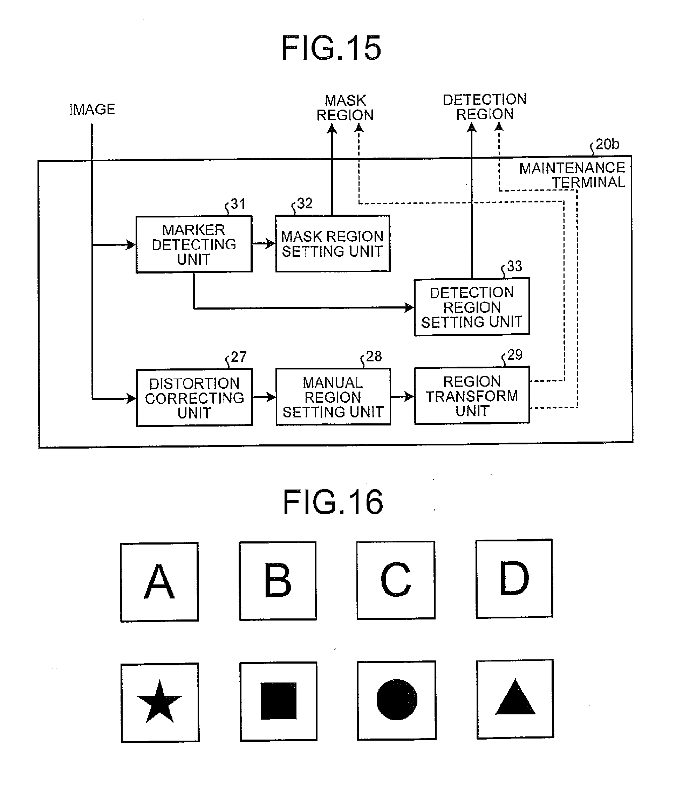

FIG. 15 is a block diagram illustrating an example of a configuration of a maintenance terminal 20b according to the second embodiment. As illustrated in FIG. 15, the maintenance terminal 20b includes a marker detecting unit 31, a mask region setting unit 32, a detection region setting unit 33, the distortion correcting unit 27, the manual region setting unit 28, and the region transform unit 29.

The marker detecting unit 31 analyzes an image acquired by the image sensor 10, detects a predetermined marker from the image, and acquires the type of the marker and the detection position (pixel unit) in the image. The marker is, for example, an object with a predetermined color or shape, or a small piece such as a paper on which a predetermined symbol (A, B, C, D) or a figure (star, rectangle, circle, triangle) is written as illustrated in FIG. 16. The purposes of markers are predetermined according to respective types, such as the purpose of mask region setting or the purpose of detection region setting. Herein, FIG. 16 is a diagram illustrating an example of the marker.

Also, the marker is detected using character recognition or image recognition that is a publicly-known image processing method. Also, the detection position may be based on a predetermined position on the marker such as the center of the marker or the top corner of the marker, and may be acquired with an accuracy of a subpixel.

When a marker for mask region setting (hereinafter, referred to as a mask region setting marker) is included among the marker detected by the marker detecting unit 31, the mask region setting unit 32 extracts the mask region setting marker, and derives a mask region based on a region formed by the mask region setting marker. Also, the mask region setting unit 32 transmits the derived mask region to the corresponding image sensor 10, retains the same in the mask region setting retaining unit 12 of the corresponding image sensor 10, and sets a mask region of each image sensor 10.

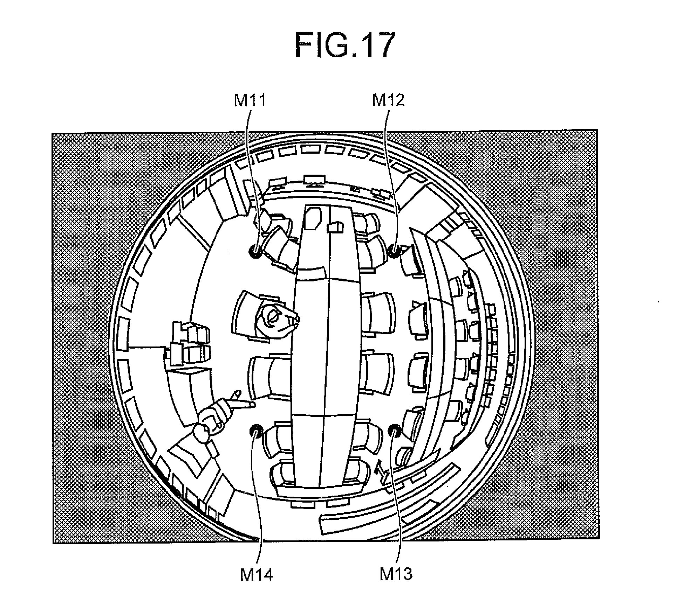

Hereinafter, an example of the operation of the mask region setting unit 32 will be described with reference to FIGS. 17 to 19. Herein, FIG. 17 is a diagram illustrating an example of an image acquired by the image sensor 10, which includes mask region setting markers M11 to M14. Herein, the marker detecting unit 31 detects mask region setting markers M11 to M14 from the image of FIG. 17, and acquires the detection position of the mask region setting markers M11 to M14 as the coordinates in units of pixels as described below.
Detection Position of Mask Region Setting Marker M11: (x_{A}, y_{A})
Detection Position of Mask Region Setting Marker M12: (x_{B}, y_{B})
Detection Position of Mask Region Setting Marker M13: (x_{C}, y_{C})
Detection Position of Mask Region Setting Marker M14: (x_{D}, y_{D})

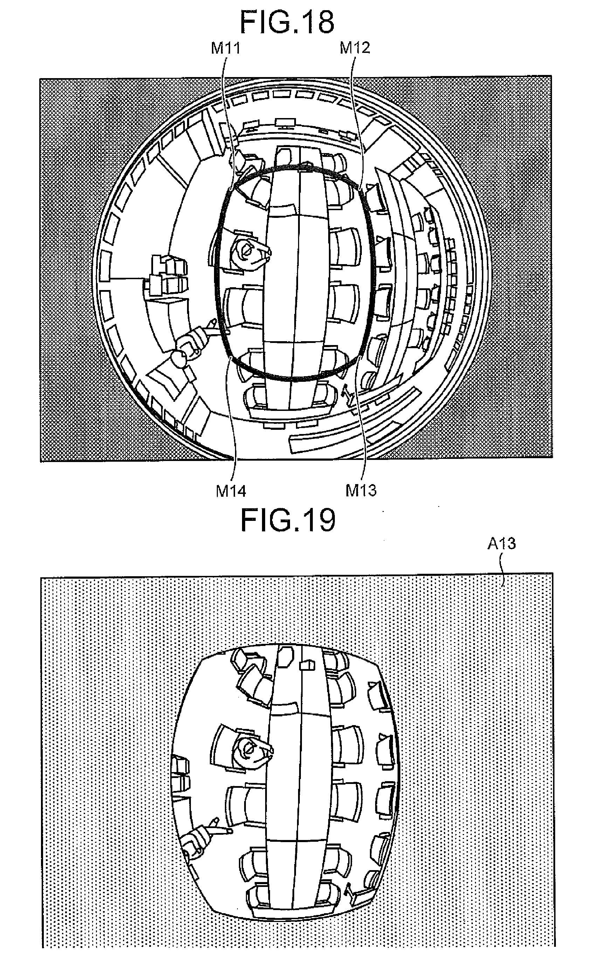

Subsequently, as illustrated in FIG. 18, the mask region setting unit 32 connects the four detection positions of the mask region setting markers M11 to M14 by a line segment having a curvature according to a distortion factor of the corresponding image sensor 10, and forms a region from the mask region setting markers M11 to M14. Herein, the mask region setting unit 32 adds a distortion by a publicly-known method by using a distortion factor of the camera parameter retaining unit 23 (not illustrated) illustrated in FIG. 3 or a distortion factor derived from the image. Also, the mask region setting unit 32 scans an image, masks the entire region outside the line connected as illustrated in FIG. 19, and sets the masked region as a mask region A13.

In the above example, the outside of a region surrounded by the four mask region setting markers is masked. However, the present invention is not limited thereto, and the inside of a region surrounded by the four mask region setting markers may be masked. Also, the masking side may be switched according to the content of the mask region setting marker. For example, the outside may be masked by the mask region setting markers of symbols "A to D", and the inside may be masked by the marker of a symbol "1 to 4".

Also, a plurality of groups of mask region setting markers may be installed (for example, mask region setting markers of symbols A to D and mask region setting markers of symbols 1 to 4 may be simultaneously placed), and the logical product or the logical sum of the regions derived by the respective groups of mask region setting markers may be generated as the mask region. Also, a mask region setting marker may be placed, the number of times of mask region generation may be divided in plurality, and the logical product or the logical sum of the respective derived mask regions may be taken.

Also, the number of mask region setting markers is not limited to four. For example, six mask region setting markers of one group may be used to generate a polygonal mask region. Also, the size of a mask region may be fixed, and one mask region may be generated with respect to each mask region setting marker. Also, the mask region may be generated by tripartition, quartering, or the like.

When a marker for detection region setting (hereinafter, referred to as a detection region setting marker) is included among the marker detected by the marker detecting unit 31, the detection region setting unit 33 generates a detection region based on the detection positions of the respective detection region setting markers. Also, the detection region setting unit 33 transmits the generated detection region to the corresponding image sensor 10, retains the same in the detection region setting retaining unit 13 of the corresponding image sensor 10, and sets a detection region of each image sensor 10.

Also, since the operation of the detection region setting unit 33 is the same as the operation of the mask region setting unit 32, a detailed description thereof will be omitted. Also, the detection region setting markers may be different according to the respective types of detection regions, such as a detection region setting marker representing a passage region and a detection region setting marker representing a work region.

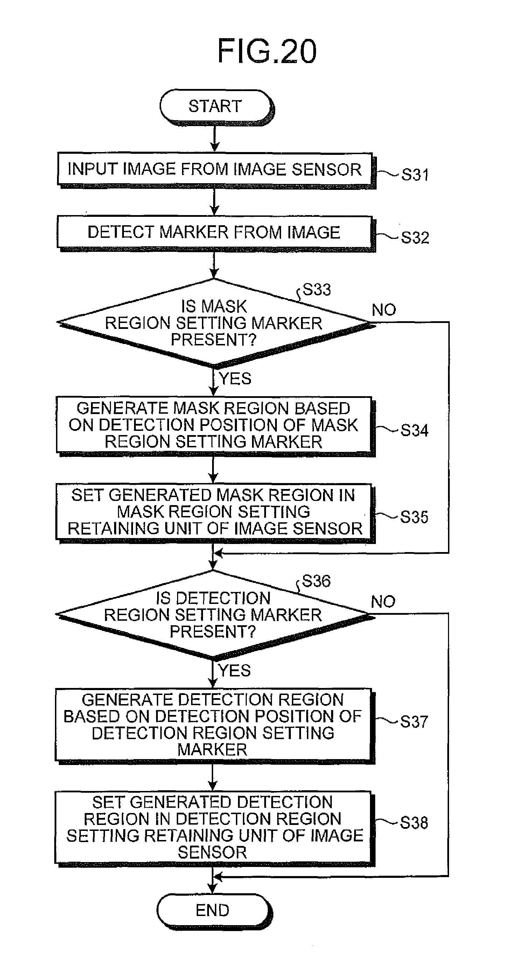

Next, the operation of the maintenance terminal 20b according to the second embodiment will be described with reference to FIG. 20. FIG. 20 is a flowchart illustrating an example of region setting processing performed by the maintenance terminal 20b. Also, the present processing is performed in setting (changing) a mask region and a detection region, such as the installation or maintenance of the image sensor 10.

First, when an image is acquired in each image sensor 10 and the image is output to the maintenance terminal 20b (step S31), the marker detecting unit 31 analyzes each input image, detects a predetermined marker from the image, and acquires the type of the marker and the detection position in an image (step S32).

Subsequently, the mask region setting unit 32 determines whether a mask region setting marker is included among the marker detected from each image by the marker detecting unit 31 (step S33). Herein, when it is determined that a mask region setting marker is not included in any image (No in step S33), the operation proceeds to step S36.

Also, when a mask region setting marker is included in any image (Yes in step S33), the mask region setting unit 32 connects the detection positions of the mask region setting markers by a line according to a distortion factor of the corresponding image sensor 10, masks the entire region outside (or inside) the connected line, and generates a mask region (step S34). Subsequently, the mask region setting unit 32 retains the derived mask region in the mask region setting retaining unit 12 of the corresponding image sensor 10, sets a mask region in each image sensor 10 (step S35), and proceeds to step S36.

In step S36, the mask region setting unit 32 determines whether a detection region setting marker is included among the marker detected from each image by the marker detecting unit 31 (step S36). Herein, when it is determined that a detection region setting marker is not included in any image (No in step S36), the present processing is ended.

Also, when a detection region setting marker is included in any image (Yes in step S36), the detection region setting unit 33 connects the detection positions of the detection region setting markers by a line according to a distortion factor of the corresponding image sensor 10, masks the entire region inside (or outside) the connected line, and generates a detection region (step S37). Subsequently, the detection region setting unit 33 retains the generated detection region in the detection region setting retaining unit 13 of the corresponding image sensor 10, sets a detection region in each image sensor 10 (step S38), and ends the present processing.

As above, according to the second embodiment, the maintenance terminal 20b derives a mask region and a detection region based on the arrangement positions of markers arranged within an image capturing range of the image sensor 10, and sets the same in the corresponding image sensor 10. Accordingly, by arranging the marker at each position according to the desired region within the image capturing range of the desired image sensor 10, since the mask region and the detection region can be set in the corresponding image sensor 10, the setting of the mask region and the detection region can be performed efficiently.

### [Third Embodiment]

Next, a third embodiment will be described. In the case of the image sensor 10 installed at the ceiling, there is a possibility that an error will occur in the image capturing direction of the image sensor 10 due to a physical vibration or a temporal change. In this case, since the image capturing direction also changes according to an error in the image capturing direction, an error occurs between the mask region and the detection region and the image acquired by the image sensor 10. Therefore, in the third embodiment, a description will be given of the mode in which the mask region and the detection region can be corrected in each image sensor 10. In addition, the same components as in the above-described first embodiment will be denoted by the same reference numerals, and a detailed description thereof will be omitted.

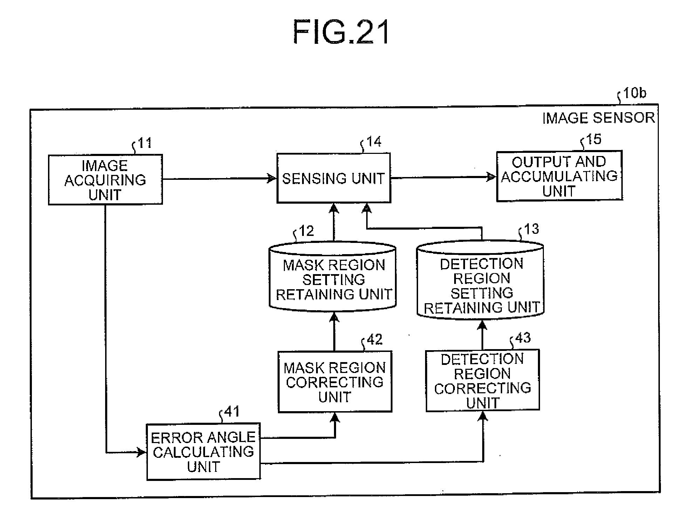

FIG. 21 is a block diagram illustrating an example of a configuration of an image sensor 10b according to the third embodiment. As illustrated in FIG. 21, the image sensor 10b includes an error angle calculating unit 41, a mask region correcting unit 42, and a detection region correcting unit 43 in addition to the image acquiring unit 11, the mask region setting retaining unit 12, the detection region setting retaining unit 13, of the sensing unit 14 and the output and accumulating unit 15 that have been described above. Also, the communication path with the maintenance terminal 20 will be omitted.

Herein, the error angle calculating unit 41 acquires the image capturing direction of a fisheye camera included in an own device. Also, a method for acquiring the image capturing direction is not particularly limited. For example, the image capturing direction may be derived using a Hough transform that is a publicly-known image processing method, and may be measured using an electronic compass that is a publicly-known technique.

When the Hough transform is used, the error angle calculating unit 41 performs a Hough transform on an image acquired by the image acquiring unit 11, detects a straight-line component present in the image, and determines a gradient of the strongest straight-line component as the image capturing direction. For example, in an office or the like, since there are many straight-line portions such as the boundary between a wall and a floor, a desk, and a ledge, the relative direction (image capturing direction) of the image sensor 10b with respect to a room, in which the image sensor 10b is installed, can be measured by detecting this line and acquiring the image capturing direction.

Also, the error angle calculating unit 41 compares the captured image capturing direction with a reference direction, and calculates an error angle representing the size and direction of an error (angle) that is the difference from the reference direction. Herein, the reference direction is a normal image capturing direction, and it may be derived from the captured image by the above method in the state of the normal image capturing direction being maintained, and may be derived using the measurement result of an electronic compass measured in the state of the normal image capturing direction being maintained. Also, the calculation of the error angle is performed at predetermined periods (for example, one hour or one day).

The mask region correcting unit 42 corrects the mask region retained in the mask region setting retaining unit 12 according to the error angle calculated by the error angle calculating unit 41. Specifically, the mask region correcting unit 42 removes the difference between the image acquired by an own device and the mask region by rotating the mask region retained in the mask region setting retaining unit 12 by the error angle. Also, the detection region correcting unit 43 corrects the detection region retained in the detection region setting retaining unit 13 according to the error angle calculated by the error angle calculating unit 41, in the same manner as the mask region correcting unit 42.

Hereinafter, an example of the operations of the error angle calculating unit 41, the mask region correcting unit 42 and the detection region correcting unit 43 will be described with reference to FIGS. 4, 5, and 22 to 24.

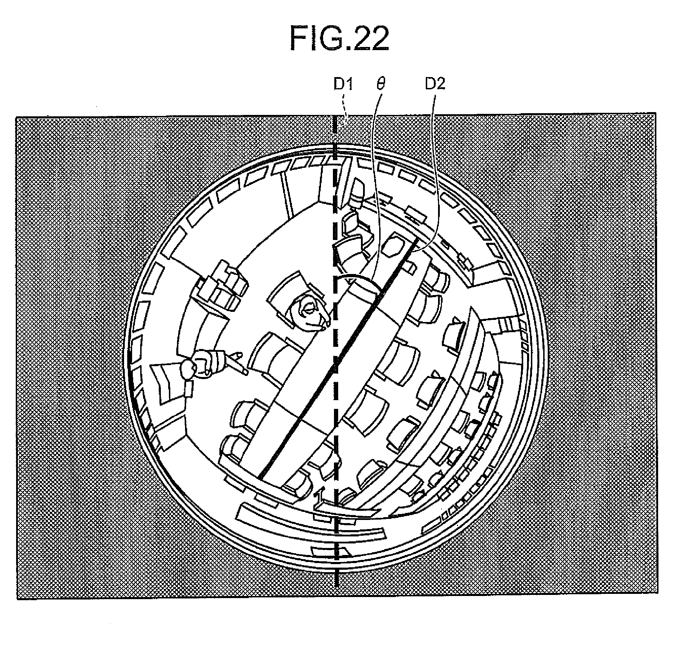

FIG. 4 illustrates an image acquired by the image acquiring unit 11 at a predetermined time t₁, and FIG. 22 illustrates an image acquired by the image acquiring unit 11 at a predetermined time t₂ after the predetermined time t₁. Herein, when the image capturing direction (reference direction) in the case of FIG. 4 is 0° and the image capturing direction in the case of FIG. 22 is 30°, the error angle calculating unit 41 compares both directions and calculates +30° (herein, the right rotation is represented as positive, and the left rotation is represented as negative) as an error angle θ. Also, in FIG. 22, the reference direction is represented by a broken line D1, and the image capturing direction measured from the same drawing is represented by a solid line D2.

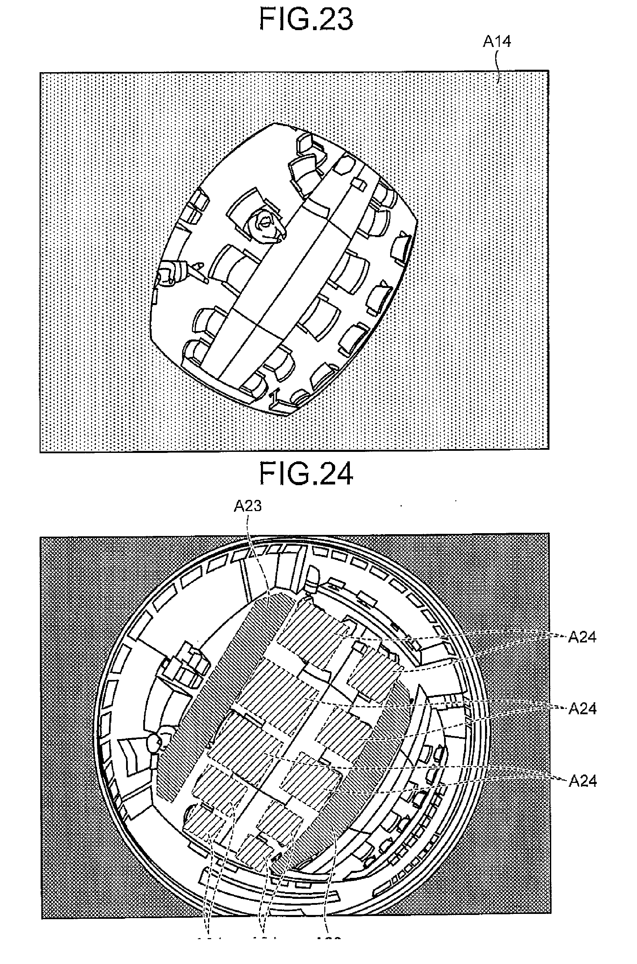

The mask region correcting unit 42 corrects a mask region retained in the mask region setting retaining unit 12 by rotating the mask region by +30° based on the error angle calculated by the error angle calculating unit 41. For example, when the mask region retained in the mask region setting retaining unit 12 is in the state illustrated in FIG. 5, the mask region correcting unit 42 corrects the mask region A11 into the mask region A14 illustrated in FIG. 23 by rotating the mask region A11 by +30° with respect to the center of the image (lens center).

Also, the detection region correcting unit 43 corrects a detection region retained in the detection region setting retaining unit 13 by rotating the detection region by +30° based on the error angle calculated by the error angle calculating unit 41. For example, when the detection region retained in the detection region setting retaining unit 13 is in the state illustrated in FIG. 5, the detection region correcting unit 43 corrects the detection regions A21 and A22 into the detection regions A23 and A24 of FIG. 24 by rotating the detection regions A21 and A22 by +30° with respect to the center of the image (lens center).

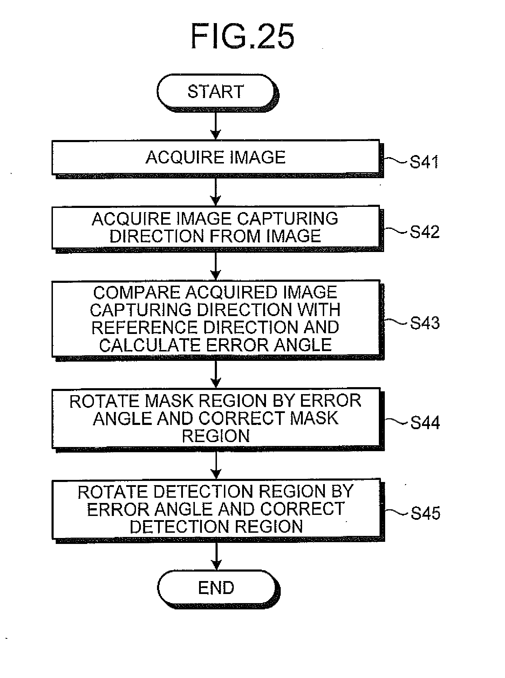

Next, a region correcting processing operation performed by the image sensor 10b according to the third embodiment will be described with reference to FIG. 25. Herein, FIG. 25 is a flowchart illustrating an example of the region correcting processing. Also, the present processing is performed at predetermined periods (for example, one hour or one day).

First, when an image captured by the fisheye camera is acquired by the image acquiring unit 11 (step S41), the error angle calculating unit 41 performs a Hough transform on the acquired image, detects a straight-line component present in the image, and determines a gradient of the strongest straight-line component as the image capturing direction (step S42). The error angle calculating unit 41 calculates the error angle by comparing the acquired image capturing direction with a reference direction (step S43).

Subsequently, the mask region correcting unit 42 corrects a mask region retained in the mask region setting retaining unit 12 by rotating the mask region by a predetermined error angle based on the error angle calculated in step S43 (step S44). Also, the detection region correcting unit 43 corrects a detection region retained in the detection region setting retaining unit 13 by rotating the detection region by a predetermined error angle based on the error angle calculated in step S43 (step S45), and ends the present processing.

As above, according to the image sensor 10b of the third embodiment, even when an error occurs in the image capturing direction of the image sensor 10b, since the correction of the mask region and the detection region can be automatically performed in each image sensor 10b, the process related to the maintenance of the image sensor 10b can be reduced.

In the third embodiment, the mask region and the detection region retained in the mask region setting retaining unit 12 and the detection region setting retaining unit 13 are corrected based on the error angle. However, when the image sensor 10b includes a mechanism capable of correcting the image capturing direction of an own device, the image capturing direction of an own device may be corrected into a normal image capturing direction (compensated) by rotating the image capturing direction of an own device by the error angle.

It may be preferable that the image capturing direction of the image sensor 10b is installed based on a predetermined object inside the building (for example, the boundary between a wall and a floor). However, it is not efficient because the image capturing direction is adjusted while actually viewing the captured image by the image sensor 10b. Therefore, by adding a predetermined mark (character or symbol) representing the image capturing direction of the image sensor 10b to the casing of the image sensor 10b, the image sensor 10b can be installed using the mark as an indicator.

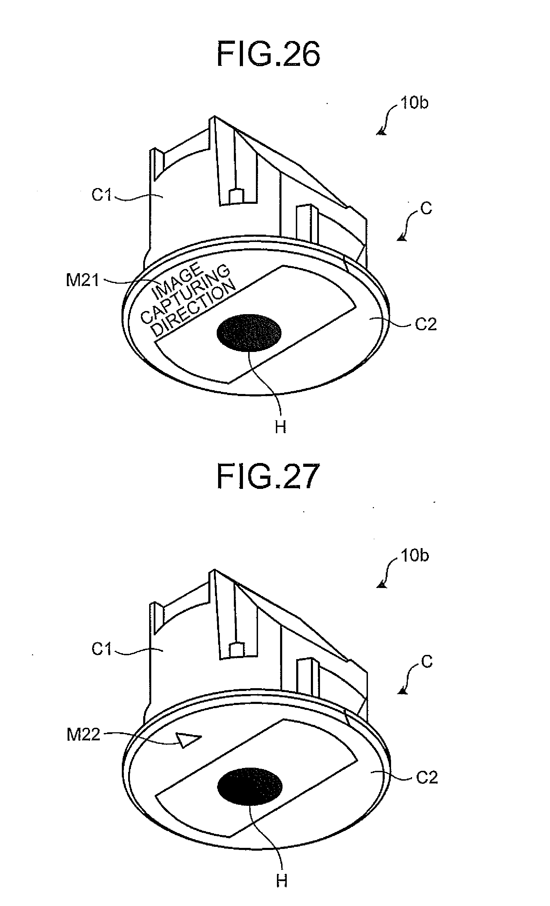

FIG. 26 or 27 is a diagram illustrating an example of the external configuration of the image sensor 10b. In FIG. 26 or 27, a casing C of the image sensor 10b includes a first casing C1 buried in a ceiling, and a second casing C2 exposed to a ceiling surface. A hole H for a fisheye camera is installed an approximately central portion of the second casing C2, and the fisheye camera received in the casing C performs image capturing through the hole H.

Herein, image capturing direction marks M21 and M22 representing the image capturing direction of the fisheye camera are provided on the surface of the second casing C2. The image capturing direction marks M21 and M22 are represented by characters or symbols, and are provided, for example, at a position based on the vertical direction of the embedded image sensor. Also, in FIGS. 26 and 27, the vertical direction of the image sensor is represented by the installation position (direction) of the image capturing direction marks M21 and M22.

In this manner, by installing the image capturing direction mark attached to the image sensor 10b at a ceiling portion of the image sensor 10b, the reference image capturing direction of each image sensor 10b can be easily provided. For example, when the mark region is rectangular, the installation can be performed without checking the captured image of the image sensor 10b by matching the sides of the mask region with respect to the direction of a wall or a desk where the image sensor 10b is installed.

Although embodiments of the present invention have been described above, the embodiments are merely exemplary and are not intended to limit the scope of the present invention. The embodiments can be implemented in various other modes, and a variety of omission, substitution, modification and addition can be made therein without departing from the gist of the present invention. Also, the above embodiments and the modifications thereof are included in the scope and gist of the present invention, and are included in inventions described in claims and equivalents thereof.

For example, in the above embodiments, although the fisheye camera is described as the image sensor 10 (10a, 10b), the present invention is not limited thereto and a typical camera may also be used.

Also, in the above embodiments, although the mask region setting unit 24 (24a, 32), the detection region setting unit 26 (33), and various functional units related to the operations of both of the functional units (the lens center detecting unit 21, the mask region setting parameter retaining unit 22, the camera parameter retaining unit 23, the action acquiring unit 25, the marker detecting unit 31, and the like) are included in the maintenance terminal 20 (20a, 20b), the present invention is not limited thereto and they may be provided in each image sensor 10.

Also, in the above embodiments, although the error angle calculating unit 41 and the mask region correcting unit 42 are included in each image sensor 10, the present invention is not limited thereto and the maintenance terminal 20 may include the error angle calculating unit 41 and the mask region correcting unit 42 to correct the error angle of each image sensor 10.

Also, although programs executed in the respective devices according to the above embodiments are beforehand included and provided in the storage mediums (ROM or storage unit) included in the respective devices, the present invention is not limited thereto and they may also be recorded and provided in the form of an installable file or an executable file on a computer-readable recording medium such as CD-ROM, flexible disk (FD), CD-R, or DVD (digital versatile disk). Also, the storage medium is not limited to a medium independent of a computer or an embedded system, but may be a storage medium that download, stores or temporarily stores a program transmitted through LAN, Internet, or the like.

Also, the programs executed in the respective devices of the above embodiments may be provided by being stored on a computer connected to a network such as Internet, and may be provided or distributed a network such as Internet.

### DESCRIPTION OF THE REFERENCE NUMERALS

- 100: IMAGE SENSOR SYSTEM
- 10, 10a, 10b: IMAGE SENSOR
- 11: IMAGE ACQUIRING UNIT
- 12: MASK REGION SETTING RETAINING UNIT
- 13: DETECTION REGION SETTING RETAINING UNIT
- 14: SENSING UNIT
- 15: OUTPUT AND ACCUMULATING UNIT
- 16: AUTHORITY SETTING RETAINING UNIT
- 17: LOGIN PROCESSING UNIT
- 20, 20a, 20b: MAINTENANCE TERMINAL
- 21: LENS CENTER DETECTING UNIT
- 22: MASK REGION SETTING PARAMETER RETAINING UNIT
- 23: CAMERA PARAMETER RETAINING UNIT
- 24, 24a: MASK REGION SETTING UNIT
- 25: ACTION ACQUIRING UNIT
- 26: DETECTION REGION SETTING UNIT
- 27: DISTORTION CORRECTING UNIT
- 28: MANUAL REGION SETTING UNIT
- 29: REGION TRANSFORM UNIT
- 31: MARKER DETECTING UNIT
- 32: MASK REGION SETTING UNIT
- 33: DETECTION REGION SETTING UNIT
- 41: ERROR ANGLE CALCULATING UNIT
- 42: MASK REGION CORRECTING UNIT
- 43: DETECTION REGION CORRECTING UNIT
- N: NETWORK

## Claims

1. An image sensor system comprising:
an image capturing unit that captures an image of a predetermined space;
an image acquiring unit that acquires the image captured by the image capturing unit;
a mask region deriving unit that derives, by using the image acquired by the image acquiring unit, a mask region not to be sensed from the image;
a detection region deriving unit that derives, by using the image acquired by the image acquiring unit, a detection region of each type as a sensing target from the image;
a retaining unit that retains the mask region and the detection region as setting information; and
a sensing unit that senses a state of the space from the image acquired by the acquiring unit based on the setting information retained in the retaining unit.

2. The image sensor system according to claim 1, wherein
the image capturing unit is a fisheye camera, and
the mask region deriving unit detects a lens center of the fisheye camera from the image acquired by the image acquiring unit, and derives a region, which represents a predetermined shape adjusted according to an image capturing condition of the image capturing unit with respect to the lens center, as the mask region.

3. The image sensor system according to claim 1, further comprising an action acquiring unit that acquires a feature amount of each region of the image, corresponding to a numerical value of an action content of a person in the space, from an image within a predetermined period acquired by the image acquiring unit, wherein
the mask region deriving unit derives the mask region based on the feature amount of each region acquired by the action acquiring unit, and
the detection region deriving unit derives the detection region classified for every predetermined type based on the feature amount of each region acquired by the action acquiring unit.

4. The image sensor system according to claim 1, further comprising a marker detecting unit that detects a predetermined marker included in the image, wherein
the mask region deriving unit derives the mask region based on a region formed by a mask region setting marker among a plurality of markers detected by the marker detecting unit, and
the detection region deriving unit derives the detection region based on a region formed by a detection region setting marker among the markers detected by the marker detecting unit.

5. The image sensor system according to claim 4, wherein
the image capturing unit is a fisheye camera, and
the mask region deriving unit and the detection region deriving unit form a region by connecting the markers by a line segment according to a distortion factor of the fisheye camera.

6. The image sensor system according to claim 1, further comprising an input unit that receives an input of a region corresponding to the mask region and the detection region on the image acquired by the image acquiring unit, wherein
the retaining unit retains the region corresponding to the mask region and the detection region input on the image as the setting information.

7. The image sensor system according to claim 6, further comprising:
an image normalizing unit that performs image processing in which the image captured by the image sensor is normalized; and
an inverse transform unit that performs an inverse transformation of the image processing, wherein
the image capturing unit is a fisheye camera,
the input unit receives an input of the region corresponding to the mask region and the detection region on the normalized image, and
the retaining unit retains the result of the inverse transformation performed by the inverse transform unit on the region corresponding to the mask region and the detection region input on the image as the setting information.

8. The image sensor system according to claim 1, further comprising a restricting unit that restricts an output of the image acquired by the image acquiring unit according to a terminal type of a terminal or a user type of a user requesting the image.

9. The image sensor system according to claim 1, further comprising:
an image capturing direction acquiring unit that acquires an image capturing direction of the image capturing unit;
a calculating unit that compares the image capturing direction acquired by the image capturing direction acquiring unit with a normal image capturing direction, and calculates a difference between both directions as an error angle; and
a correcting unit that corrects the setting information retained in the retaining unit or the image capturing direction of the image capturing unit based on the error angle calculated by the calculating unit.

10. The image sensor system according to claim 9, comprising a casing that houses the image capturing unit, wherein
a predetermined mark representing the image capturing direction of the image capturing unit is provided on a surface of the casing.

11. An information processing apparatus, which is communicatively connected to an image sensor that senses a state of a space from an image of the predetermined space, comprising:
a mask region deriving unit that derives, by using the image, a mask region not to be sensed from the image;
a mask region setting unit that sets the mask region derived by the mask region deriving unit in the image sensor;
a detection region deriving unit that derives, by using the image captured by the image sensor, a detection region of each type as a sensing target from the image; and
a detection region setting unit that sets the detection region of each type derived by the detection region deriving unit in the image sensor.

12. The information processing apparatus according to claim 11, wherein
the image sensor is a fisheye camera, and
the mask region deriving unit detects a lens center of the fisheye camera from the image captured by the image sensor, and derives a region, which represents a predetermined shape adjusted according to an image capturing condition of the image sensor with respect to the lens center, as the mask region.

13. The information processing apparatus according to claim 11, further comprising an action acquiring unit that acquires a feature amount of each region of the image, corresponding to a numerical value of an action content of a person in the space, from an image within a predetermined period captured by the image sensor, wherein
the mask region deriving unit derives the mask region based on the feature amount of each region acquired by the action acquiring unit, and
the detection region deriving unit derives the detection region classified for every predetermined type based on the feature amount of each region acquired by the action acquiring unit.

14. The information processing apparatus according to claim 11, further comprising a marker detecting unit that detects a predetermined marker included in the image, wherein
the mask region deriving unit derives the mask region based on a region formed by a mask region setting marker among a plurality of markers detected by the marker detecting unit, and
the detection region deriving unit derives the detection region based on a region formed by a detection region setting marker among the markers detected by the marker detecting unit.

15. The information processing apparatus according to claim 14, wherein
the image sensor is a fisheye camera, and
the mask region deriving unit and the detection region deriving unit form a region by connecting the markers by a line segment according to a distortion factor of the fisheye camera.

16. The information processing apparatus according to claim 11, further comprising an input unit that receives an input of a region corresponding to the mask region and the detection region on the image captured by the image sensor, wherein
the mask region setting unit sets the region corresponding to the mask region input on the image as the mask region in the image sensor by which the image is captured, and
the detection region setting unit sets the region corresponding to the detection region input on the image as the detection region in the image sensor by which the image is captured.

17. The information processing apparatus according to claim 16, further comprising:
an image normalizing unit that performs image processing in which the image captured by the image sensor is normalized; and
an inverse transform unit that performs an inverse transformation of the image processing, wherein
the image capturing unit is a fisheye camera,
the input unit receives the input of the region corresponding to the mask region and the detection region on the normalized image,
the mask region setting unit sets the result of the inverse transformation performed by the inverse transform unit on the region corresponding to the mask region input on the image as the mask region in the image sensor by which the image is captured, and
the detection region setting unit sets the result of the inverse transformation performed by the inverse transform unit on the region corresponding to the detection region input on the image as the detection region in the image sensor by which the image is captured.

18. An information processing method executed by an information processing apparatus, which is communicatively connected to an image sensor that senses a state of a space from an image of the predetermined space, comprising:
a mask region deriving step that derives, by a mask region deriving unit and by using the image captured by the image sensor, a mask region not to be sensed from the image;
a mask region setting step that sets, by a mask region setting unit, the mask region derived in the mask region deriving step in the image sensor;
a detection region deriving step that derives, by a detection region deriving unit and by using the image captured by the image sensor, a detection region of each type as a sensing target from the image; and
a detection region setting step that sets, by a detection region setting unit, the detection region of each type derived by the detection region deriving unit in the image sensor.

19. A program for causing a computer of an information processing apparatus, which is communicatively connected to an image sensor that senses a state of a state from an image of the predetermined space, to function as:
a mask region deriving unit that derives, by using the image captured by the image sensor, a mask region not to be sensed from the image;
a mask region setting unit that sets the mask region derived by the mask region deriving unit in the image sensor;
a detection region deriving unit that derives, by using the image captured by the image sensor, a detection region of each type as a sensing target from the image; and
a detection region setting unit that sets the detection region of each type derived by the detection region deriving unit in the image sensor.
